# EUROPÄISCHE PATENTSCHRIFT

(11) **EP 2 541 272 B1**
(45) Veröffentlichungstag und Bekanntmachung des Hinweises auf die Patenterteilung: **29.07.2020**
(21) Anmeldenummer: 12170420.9
(22) Anmeldetag: 01.06.2012
(51) Int. Cl.: G01S 3/78, G01S 5/16, G01S 3/782, G05D 1/00

(54) **Selbsttätig verfahrbares Gerät sowie Verfahren zur Zielführung eines solchen Gerätes**
Self-propelled device and method for guiding such a device
Appareil à déplacement automatique et procédé de guidage routier d'un tel appareil

(30) Priorität: 28.06.2011 DE 102011051397; 08.09.2011 DE 102011053386
(43) Veröffentlichungstag der Anmeldung: 02.01.2013
(73) Patentinhaber: Vorwerk & Co. Interholding GmbH, 42275 Wuppertal (DE)
(72) Erfinder: Wehner, Philipp, 45881 Gelsenkirchen (DE); Meggle, Martin, 33442 Herzebrock (DE); Sauerwald, Andres, 46238 Bottrop (DE)
(74) Vertreter: Müller, Enno

(56) Entgegenhaltungen:
- WO-A2-2006/026436
- DE-A1-102009 059 212
- US-A- 5 051 906
- US-A1- 2010 082 193

## Beschreibung

Die Erfindung betrifft zunächst ein selbsttätig verfahrbares Gerät, insbesondere Reinigungsgerät zur Reinigung eines Bodens, wie ein Saug- und/oder Kehrroboter, mit einem oder mehreren Lichtsensoren.

Geräte der in Rede stehenden Art sind bekannt. Solche insbesondere autonom operierenden Geräte, wie insbesondere Reinigungs- oder auch Transportgeräte, weiter insbesondere nutzbar im Haushaltsbereich, arbeiten im (Reinigungs-)Betrieb bevorzugt ohne Benutzereingriff. Dennoch werden diese in der Regel mit Einrichtungen zur Zielführung versehen, damit bspw. der Benutzer das Gerät in bestimmte Bereiche der Wohnung fahren lassen kann, z.B. um dort eine Spotreinigung durchzuführen. Bekannt sind diesbezüglich Fernbedienungen (Funk und auf optischer Basis mit Infrarot), bei denen die Fernbedienung bspw. Tasten für unterschiedliche Fahrtrichtungen enthalten (separate Tasten für die Fahrtrichtungen, Joystick, Vier-Wege-Schalter usw.). Mit diesen Tasten kann der Benutzer das Gerät zum Ziel steuern. Die Bedienung ähnelt der eines ferngesteuerten Autos. Diese Zielführung mittels Fernbedienung erweist sich als zeitaufwendig und für den Benutzer gewöhnungsbedürftig. Um diesem Umstand zu begegnen, sind weiter Geräte bekannt, welche mit einem oder mehreren Lichtsensoren versehen sind, insbesondere zur Zielführung mittels eines Lichtstrahles einer Lichtquelle, welcher Lichtstrahl auf einen vom Gerät entfernten Bereich des Bodens gerichtet wird, wobei weiter bevorzugt reflektierte Anteile des ausgesandten Lichtes von dem Gerät zur Zielführung verarbeitet werden.

Des Weiteren ist im Stand der Technik die Veröffentlichung US 2010/0082193 A1 bekannt, welche einen Reinigungsroboter mit einem aus mehreren Fotodioden bestehenden Detektor offenbart. Die von den Fotodioden empfangenen Signale werden zunächst mit einer Intensitätsschwelle verglichen und sodann aus den empfangenen Signalen die beiden intensitätsstärksten Signale ausgewählt und verwendet, um einen Ausgangsort der Signale zu bestimmen und in Abhängigkeit von der Richtung des Ausgangsortes den Reinigungsroboter zu verfahren.

Im Hinblick auf den vorbeschriebenen Stand der Technik wird eine technische Problematik der Erfindung darin gesehen, ein Gerät der in Rede stehenden Art insbesondere hinsichtlich der Auswertung des empfangenen Lichtsignals weiter zu verbessern.

Diese Problematik ist zunächst und im Wesentlichen durch den Gegenstand des Anspruches 1 gelöst, wobei darauf abgestellt ist, dass ein Vorverstärkungselement vorgesehen ist und ein phasenempfindliches Detektorelement sowie ein zentrales Steuerungselement, dass ein von dem Lichtsensor geliefertes Signal im Hinblick auf ein von dem zentralen Steuerungselement vorgegebenes Signalmuster geprüft wird und dass dieses Signal im Hinblick auf eine Steuerung des Geräts mit der Ausrichtung des jeweiligen Lichtsensors bei Anordnung von mehreren Lichtsensoren in Zusammenhang gebracht wird oder mit der Winkelausrichtung eines Lichtsensors. Das vorgegebene Signalmuster beinhaltet hierbei bevorzugt ausschließlich digitalisierte Low-high-Zustände, die in variablen (Zeit-) Abständen erscheinen. Hinsichtlich der Signalform (bspw. Sinus, Rechteck, Sägezahn) ist das Signalmuster nicht variabel. Zufolge dieser Ausgestaltung ist ein selbsttätig verfahrbares Gerät angegeben, welches ein sehr empfindliches, dennoch gegenüber dem bekannten Stand der Technik verhältnismäßig störunanfälligeres System zum Empfang und Auswerten von Lichtsignalen aufweist. Die örtliche Richtung eines Senders, insbesondere Lichtsenders, ist zufolge der Ausgestaltung auch unter ungünstigen Störeinflüssen bestimmbar. Aus dem Stand der Technik sind Lösungen bekannt, bei welchen unter Zuhilfenahme von aktiven Bandpass-Filtern und mehrerer Lichtsensoren, insbesondere PIN-Fotodioden, es möglich ist, Informationen über die Position, z.B. eines optischen Senders, weiter bspw. eines Infrarot-Handsenders, zu gewinnen. Solche Systeme sind jedoch anfällig auf Störungen fremder Lichtquellen, da u.a. insbesondere die Güte der verwendeten Filter relativ gering ist. Zudem werden im bekannten Stand der Technik die Grenzfrequenzen typischer verwendeter Filter hardwareseitig, also durch die Dimensionierung von Kapazitäten und Widerständen, festgelegt. Durch Bauteiltoleranzen kann dies dazu führen, dass sich Sender und Empfänger in ihrer Frequenz unterscheiden und eine hohe Empfindlichkeit des Systems nicht gewährleistet werden kann. Diesem nachteiligen Einfluss von Bauteiltoleranzen ist mit der vorgeschlagenen Lösung entgegengewirkt. Zudem ist insbesondere durch die Anordnung eines zentralen Steuerungselementes bevorzugt die Frequenz des gesuchten Signals digital einstellbar. Toleranzen lassen sich daher in einfachster Weise ausgleichen. Zudem ist der Schaltungsaufwand einer bevorzugten mikroprozessorgesteuerten Schaltung gering. Bevorzugt ist insbesondere der Einsatz von nicht sichtbarem Licht, also insbesondere Infrarot oder Ultraviolett. Vorzugsweise sind weiter diesbezüglich Lichtsensoren im Infrarotbereich genutzt. Alternativ sind auch alle optischen Wellenlängen diesbezüglich verwendbar, darüber hinaus auch die Nutzung von Materiewellen (Schall, Ultraschall). Bei einer Anordnung von mehreren Lichtsensoren sind diese bevorzugt örtlich diskret angeordnet, dies weiter bevorzugt in verschiedenen Bereichen des Gerätes, die vorzugsweise maximal 10 bis 100 cm, weiter bevorzugt 20 bis 50 cm voneinander (insbesondere in Umfangsrichtung des Gerätes), entfernt sind, wobei weiter bevorzugt alle Lichtsensoren auf einer gemeinsamen, bevorzugt bodenparallelen Ebene angeordnet sind. Weiter bevorzugt sind bei einer Anordnung von mindestens zwei Lichtsensoren diese derart angeordnet, dass die Lichtsensoren bevorzugt maximal 40 cm, weiter bevorzugt maximal 30 cm zu der die Signale auswertenden Einheit entfernt sind. Es sind diesbezüglich weiter bevorzugt sowohl 1 D-, 2 D- als auch 3 D-Signal-Erkennungen möglich. In alternativer Ausgestaltung ist ein bevorzugt um eine Vertikalachse des Gerätes rotierender einzelner Lichtsensor vorgesehen. Insbesondere durch die Anordnung zumindest eines phasenempfindlichen Detektorelementes, weiter bevorzugt durch zwei phasenempfindliche Detektorelemente ist in vorteilhafter Weise die Möglichkeit gegeben, die Auswertung des Lichtsignales, insbesondere die Erkennung des Lichtsignales sowie weiter bevorzugt die Richtung, aus welcher das empfangene Lichtsignal ermittelt wird, nicht unmittelbar am Lichtsensor anzuordnen. Vielmehr ist hierdurch die vorteilhafte Möglichkeit einer quasi zentralen Elektronik gegeben. Dies bietet insbesondere Vorteile hinsichtlich der Bauraumgröße im unmittelbaren Bereich der Lichtsensoren, dies weiter in vorteilhafter Weise unter Berücksichtigung von bei größeren Entfernungen zwischen der Elektronik und den Lichtsensoren auftretendem Rauschen. Das vom Lichtsensor gelieferte und über einen der mehreren Lichtsensoren bzw. über den einen bevorzugt rotierenden Lichtsensor empfangene Signal wird zufolge der vorgeschlagenen Lösung mit einem vorgegebenen digitalisierten Signalmuster (Referenzmuster) verglichen. Das phasenempfindliche Detektorelement ist bevorzugt ein Lock-In-Verstärker, der einen sehr schmalbandigen Bandpassfilter darstellt. Eingekoppelte Störungen können so zuverlässig unterdrückt werden. Das gesuchte Signalmuster wird durch das zentrale Steuerungselement vorgegeben, wobei die Wahl des Signalmusters sich insbesondere aus dem Abstand zu anderen Frequenzen bzw. Signalmustern in der Umgebung, in welcher die Schaltung betrieben wird, ergibt. Signale anderer Quellen (bspw. Raumbeleuchtung, Fernbedienungen etc.) werden in bevorzugter Weise nicht imitiert. Bei dem Signalmuster handelt es sich um ein Frequenzmuster, insbesondere Lichtfrequenzmuster, so weiter insbesondere um eine Pulsfolge eines kodierten Signals, insbesondere Lichtsignals. Die über einen Lichtsensor empfangenen Signale werden bevorzugt zunächst vorverstärkt, wonach das Signal an den phasenempfindlichen Gleichrichter bzw. an das phasenempfindliche Detektorelement weitergeleitet wird. Hierbei wird bevorzugt pro Phase eine Verstärkerschaltung (Lock-In-Verstärker) genutzt, welche bevorzugt mit Hilfe eines Multiplexers zwischen invertierend und nicht-invertierend umschaltbar ist. Der Multiplexer kann weiter bevorzugt in dem zentralen Steuerungselement integriert sein. Auch ist diesbezüglich ein integrierter Lock-In-Verstärker vorgesehen. Letzterer benötigt die Referenzsignale, die durch den Mikrocontroller bereitgestellt werden. Zudem bietet das zentrale Steuerungselement bevorzugt die Möglichkeit, den Signalsender und den oder die Lichtsensoren mittels einer Kalibrierfunktion aufeinander abzustimmen. Diesbezüglich ist sowohl eine durch den Benutzer aktivierbare Kalibrierung wie auch eine Autokalibrierung möglich.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

So ist in einer weiter bevorzugten Ausgestaltung vorgesehen, dass dem Vorverstärkerelement ein Auswahlelement vorgeschaltet ist, zur Auswahl eines Lichtsensors bei Anordnung von mehreren, bevorzugt örtlich diskret angeordneten Lichtsensoren. Dieses Auswahlelement schaltet bevorzugt selbsttätig, d.h. insbesondere ohne entsprechenden Eingriff durch den Benutzer weiter bevorzugt elektronisch gesteuert abwechselnd zwischen den mehreren Lichtsensoren, so dass jeweils bevorzugt nur ein Lichtsensor aktiv ein Lichtsignal bzw. ein Signalmuster empfängt und weiterleitet. Entsprechend ist in Abhängigkeit von dem jeweils aktiven Lichtsensor die Richtung, aus welcher das Signalmuster empfangen wird, eindeutig erkennbar. Bei einer weiter bevorzugten Anordnung nur eines, dafür jedoch bevorzugt um eine Vertikalachse rotierenden Lichtsensors, erfolgt die Berechnung der Richtungsinformation des empfangenen Signalmusters zufolge einer bevorzugten Winkelerfassung des rotierenden Sensors, dies weiter bevorzugt unter Berücksichtigung ggf. durch die in der Auswerteelektronik gegebene Signallaufzeit durch die Elektronik. Alternativ wird diesbezüglich bevorzugt ein Time-Stamp als Signal berechnet. Bevorzugt ist hierdurch ermöglicht, aus einem mittels eines Drehgebers oder dergleichen ermittelten Drehwinkel des Sensors und der berechneten zeitlichen Filterverzögerung die Richtung des Signals zu ermitteln.

Weiter bevorzugt ist ein Bandpassfilterelement vorgesehen, das von einem Lichtsensorsignal vor Erreichen des Vorverstärkerelements zu durchlaufen ist. Das Bandpassfilterelement dient bevorzugt der Entfernung unerwünschter Störungen auf den Signalleitungen mit Frequenzanteilen weit ab der gesuchten Frequenz bzw. des gesuchten Signalmusters. Entsprechend werden bevorzugt Frequenzen bzw. Signalmuster weit außerhalb des gesuchten Bandes in dem nachfolgenden Vorverstärkerelement nicht mitverstärkt.

Ein Vorverstärkungsfaktor des Vorverstärkerelements ist weiter bevorzugt durch das zentrale Steuerungselement vorgegeben. Bevorzugt realisiert hierbei ein Multiplexer, welcher weiter bevorzugt integriert ist in das zentrale Steuerungselement, eine variable Vorverstärkung, wozu bevorzugt je nach Kodierung unterschiedliche Schaltungswege aktiviert werden, aus welchen die Verstärkungsfaktoren resultieren. Die Wahl des Verstärkungsfaktors ergibt sich bevorzugt aus der zuletzt ermittelten Signalstärke am Ausgang des phasenempfindlichen Detektorelements sowie aus den Signalstärken aller Sensoren. Liegt diese unterhalb eines empirisch ermittelten oder beispielsweise aus der aktuellen Verstärkung abgeleiteten Grenzwertes, so wird der Verstärkungsfaktor bevorzugt angehoben, um das Signal nicht zu verlieren. Bei zu hoher Signalstärke droht eine Übersteuerung der Elektronik. Um dies zu verhindern, wird bevorzugt rechtzeitig ein hinreichend geringerer Verstärkungsfaktor gewählt. Die Anpassung der Verstärkungsfaktoren wird bevorzugt nach jeder Messung vorgenommen, wobei sich die Einstellung schaltungsbedingt bevorzugt auf alle Empfänger auswirkt, sofern mehrere Sensoren vorgesehen sind.

Die Auswahl eines Lichtsensors bei Anordnung von mehreren Lichtsensoren ist bevorzugt durch das zentrale Steuerungselement vornehmbar, welches weiter bevorzugt das dem Vorverstärkerelement, weiter bevorzugt dem Bandpassfilterelement vorgeordnete Auswahlelement ansteuert.

Weiter bevorzugt ist zwischen dem phasenempfindlichen Detektorelement und dem zentralen Steuerungselement ein Tiefpassfilterelement geschaltet. Ausgangsseitig des phasenempfindlichen Detektors werden bevorzugt Gleichspannungs-Signale (DC-Signale) ausgewertet. Um diese zu erhalten, wird über die Ausgangssignale der vorangegangenen Schaltung integriert. Dies wird bevorzugt erreicht durch die Verwendung eines Tiefpassfilterelementes mit niedriger Grenzfrequenz.

Ggf. können am Ausgang des phasenempfindlichen Detektorelementes negative Spannungen auftreten, welche weiter ggf. zu einer Zerstörung des zentralen Steuerungselementes, weiter ggf. zur Zerstörung des Mikroprozessors führen können. Um dies zu verhindern, ist in weiter bevorzugter Ausgestaltung vorgesehen, dass das Tiefpassfilterelement mit einer Offset-Einstelleinheit verbunden ist. Mittels dieser werden bevorzugt die Spannungen auf >0 Volt angehoben, d.h. in einen das zentrale Steuerungselement nicht schädigenden positiven Spannungsbereich. Ist sichergestellt, dass negative Spannungen ausgeschlossen sind, bspw. durch den Betrieb des zentralen Steuerungselementes bzw. Mikrocontrollers im gesamten Versorgungsspannnungs-Bereich, kann auch auf eine Offset-Einstelleinheit verzichtet werden. Die Differenz zwischen positiver und negativer Spannungsgrenze ist dann innerhalb der Spezifikation des verwendeten Mikrocontrollers gelegt.

Zudem erweist es sich von Vorteil, dass, wie in einer weiter bevorzugten Ausgestaltung vorgesehen, ein Lichtsensor im Hinblick auf ein bestimmtes Frequenzband ausgewählt oder eingerichtet ist und das Lichtsignal innerhalb dieses Frequenzbandes gegeben ist. Entsprechend sind Lichtsensor und Lichtsignal bzw. der das Lichtsignal ausgebende Lichtsender insbesondere hinsichtlich des Frequenzbandes sowie weiter bevorzugt hinsichtlich des Signalmusters aufeinander abgestimmt.

Die Erfindung betrifft weiter ein Verfahren zur Zielführung eines selbsttätig verfahrbaren Geräts, insbesondere Reinigungsgeräts zur Reinigung eines Bodens, wie ein Saug- und/oder Kehrroboter, mit einem oder mehreren Lichtsensoren.

Um ein Verfahren der in Rede stehenden Art weiter zu verbessern, wird vorgeschlagen, dass ein von dem Lichtsensor geliefertes Signal mittels eines Vorverstärkerelementes verstärkt wird, von einem phasenempfindlichen Detektorelement detektiert wird und im Hinblick auf ein von einem zentralen Steuerungselement vorgegebenes Signalmuster geprüft wird und dass dieses Signal im Hinblick auf eine Steuerung des Geräts mit der Ausrichtung des jeweiligen Lichtsensors bei Anordnung von mehreren Lichtsensoren in Zusammenhang gebracht wird oder mit der Winkelausrichtung eines Lichtsensors. Zufolge dieser Ausgestaltung ist ein Verfahren angegeben, mit welchem eine empfindliche und gegenüber dem bekannten Stand der Technik störungsunanfälligere Signalauswertung erreichbar ist. Wie auch bei der vorbeschriebenen gegenständlichen Lösung ist auch hinsichtlich des Verfahrens der nachteilhafte Einfluss von Bauteiltoleranzen verringert. Weiter ist bevorzugt hierdurch auch die Frequenz bzw. das digitalisierte Signalmuster des gesuchten Signals digital einstellbar.

Hinsichtlich ergänzender oder alternativer Merkmale im Zusammenhang mit dem Verfahren gilt für deren anspruchsmäßiger Zuordnung das Gleiche wie oben bezüglich deren gegenständlichen Merkmale ausgeführt.

Das vorbeschriebene System insbesondere gemäß dem Gegenstand des Anspruches 1 kommt bevorzugt mit nur einer zentralen Elektronik aus, da das zusätzliche Rauschen, welches durch die Auswahl unterschiedlicher (an mehreren Orten befindlicher) Sensoren entstehen kann, durch die Lock-In-Technik im phasenempfindlichen Detektorelement wieder eliminiert werden kann. Dies ist bei üblichen Kleinsignal-Auswertungen nicht möglich und führt dazu, dass zumindest eine Vorverstärkung und eine Filterung für jeden Sensor aufgebaut werden muss. Die Funktion ist sowohl mit abgestimmter Phase als auch mit nicht abgestimmter Phase möglich. Der optische Wellenlängenbereich kann durch geeigneten Austausch der Lichtsensoren sehr einfach geändert werden. Das Auswerteprinzip basiert hierbei auf den elektrisch gewandelten Sensorsignalen und ist somit von der Art des Detektors unabhängig. Es ist lediglich eine stabile Sendefrequenz erforderlich. Das digitalisierte Signalmuster und die Signalfrequenz können nahezu frei gewählt werden, da das entsprechende Referenzsignal in der zentralen Steuereinheit gezielt nachgebildet werden kann.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in perspektivischer Darstellung ein selbsttätig verfahrbares Gerät in einer ersten Ausführungsform mit einer Mehrzahl von zueinander beabstandeten, fest angeordneten Lichtsensoren, sowie einen handgeführten Lichtsender;
- Fig. 2: eine der Fig. 1 entsprechende Darstellung, jedoch eine alternative Ausführungsform des Gerätes betreffend mit einem um eine Vertikalachse rotierenden Lichtsensor;
- Fig. 3: in schematischer Darstellung die Schaltungsanordnung zur Auswertung des empfangenen Lichtsignals bei einer Lichtsensoranordnung gemäß dem Ausführungsbeispiel in Fig. 1;
- Fig. 4: ein Diagramm, ein empfangenes oder vorgegebenes Signalmuster betreffend;
- Fig. 5: ein der Fig. 4 entsprechendes Diagramm in einer weiteren Ausführungsform und
- Fig. 6: das Gerät in Draufsicht eine weitere Ausführungsform betreffend.

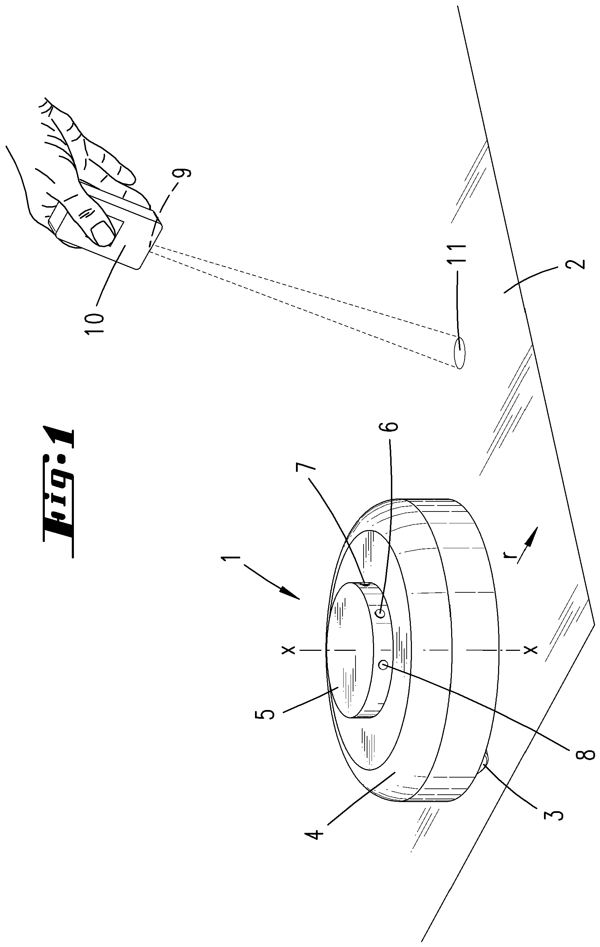

Dargestellt und beschrieben ist zunächst mit Bezug zu Fig. 1 ein Gerät 1 in Form eines Saug- und/oder Kehrgeräts, weiter in Form eines verfahrbaren Haushalts-Bodenreinigungsgerätes. Dieses besitzt ein Chassis, welches dem zu pflegenden Boden 2 zugewandt elektromotorisch angetriebene Verfahrräder 3 sowie bevorzugt eine über die Unterkante des Chassisbodens hinausragende, gleichfalls elektromotorisch angetriebene, in den Zeichnungen nicht dargestellte Bürste trägt. Darüber hinaus ist bevorzugt das Gerät 1 zusätzlich oder auch alternativ zu der Bürste mit einer Saugeinrichtung versehen.

Das Chassis ist überfangen von einer Gerätehaube 4, wobei das Gerät 1 bevorzugt einen kreisförmigen Grundriss aufweist. Bezüglich der Ausgestaltung des Gerätes 1 als Saug- und/oder Kehrgerät wird weiter auf die DE 102 42 257 A1 verwiesen. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen.

Auf der Gerätehaube 4 des Gerätes 1 ist mit Bezug zu der in Fig. 1 dargestellten ersten Ausführungsform eine bevorzugt relativ zu der Gerätehaube 4 feststehende Plattform 5 vorgesehen. Diese trägt umfangsseitig bevorzugt drei lichtempfindliche Elemente in Form von Lichtsensoren 6 bis 8. Bevorzugt ist auch eine Anordnung von mehreren, bevorzugt gleichmäßig über den gesamten Umfang verteilt angeordneten Lichtsensoren, so bspw. 5, 10 oder auch 20 Lichtsensoren. Diese Lichtsensoren 6 bis 8 sind zunächst im Wesentlichen in üblicher Verfahrrichtung r des Gerätes 1 ausgerichtet, wobei weiter bevorzugt der in Umfangsrichtung betrachtete mittlere Lichtsensor 6 bevorzugt exakt in Verfahrrichtung r ausgerichtet ist, während die beiden seitlich hierzu angeordneten Lichtsensoren 7 und 8 mit Bezug zu einer zentralen Vertikalachse x des Gerätes 1 in einem Winkel von bevorzugt 10 bis 30°, weiter bevorzugt 15° zu dem mittleren Lichtsensor 6 positioniert sind. Weiter bevorzugt sind die Lichtsensoren 6 bis 8 auf einer gemeinsamen, parallel zum Boden 2 ausgerichteten Ebene positioniert.

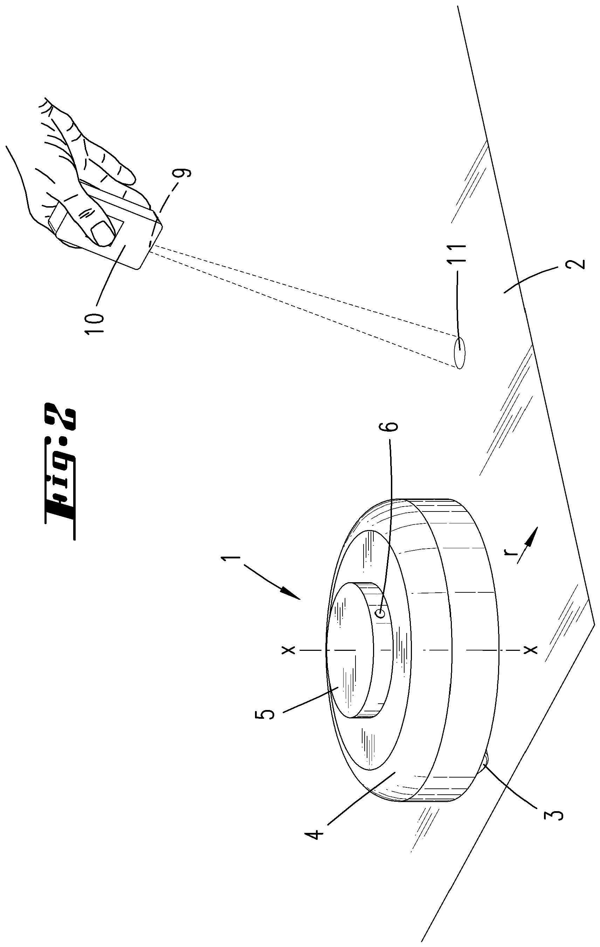

Alternativ, wie weiter in Fig. 2 dargestellt, ist die Plattform 5 relativ zu der Gerätehaube 4 um die Vertikalachse x drehbar, dies weiter bevorzugt elektromotorisch kontinuierlich um die Vertikalachse x drehbar. Die Plattform 5 trägt hierbei lediglich ein nach radial außen weisendes lichtempfindliches Element in Form eines Lichtsensors 6, mittels welchem zufolge der Rotation der Plattform 5 quasi eine Rundum-Abtastung erreicht ist.

Die Zielführung des selbsttätig verfahrbaren Gerätes 1 ist bevorzugt erreicht mittels einer Lichtquelle 9. Diese ist bevorzugt in einer Fernbedienung 10 aufgenommen. Hierbei handelt es sich weiter bevorzugt um einen Laserpointer mit rotem Licht (650 nm) oder grünem Licht (532 nm). Zusätzlich ist in dem Laserpointer eine Infrarot-Lichtquelle vorgesehen mit einer Wellenlänge von 980 nm. Der hierbei auf den Boden 2 gerichtete Laserpunkt dient bevorzugt allein als visuelle Hilfe für den Benutzer, während zugleich eine bevorzugt gegenüber dem Laserpunkt vergrößerte Infrarotfläche auf den Boden 2 geworfen wird. Bevorzugt ist hierbei weiter der Laserpunkt auf das Zentrum der Infrarotfläche gerichtet.

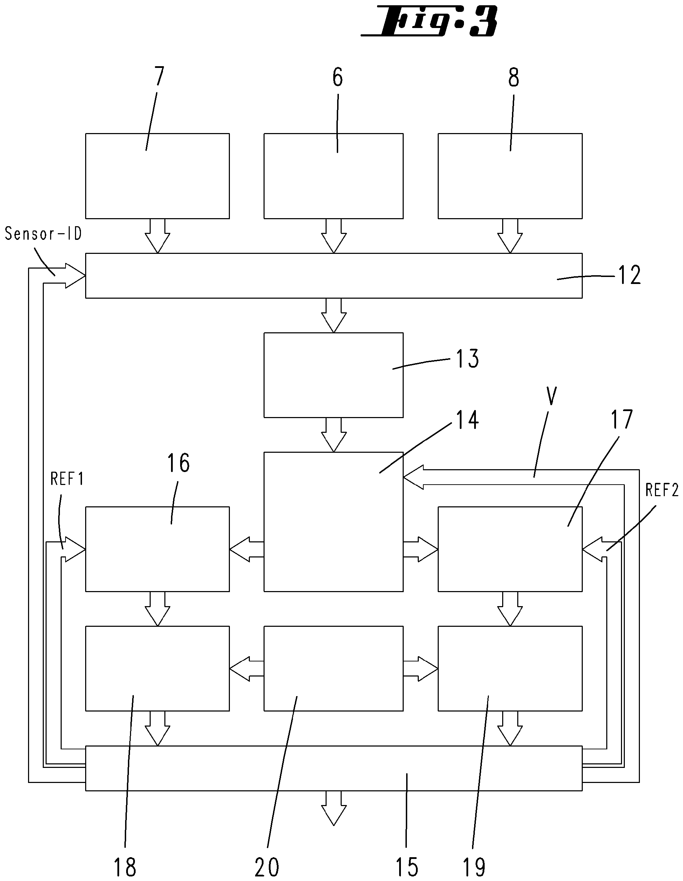

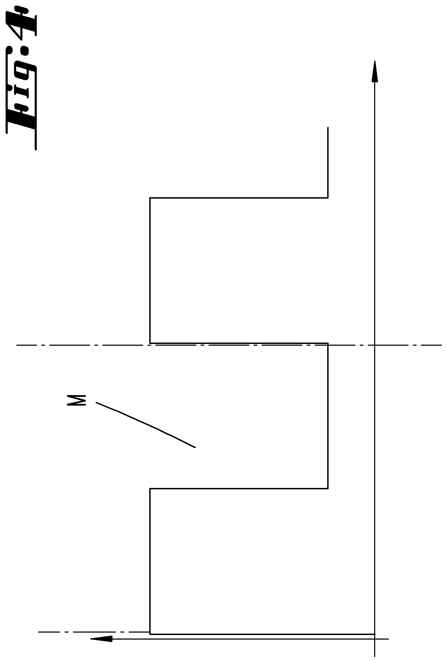

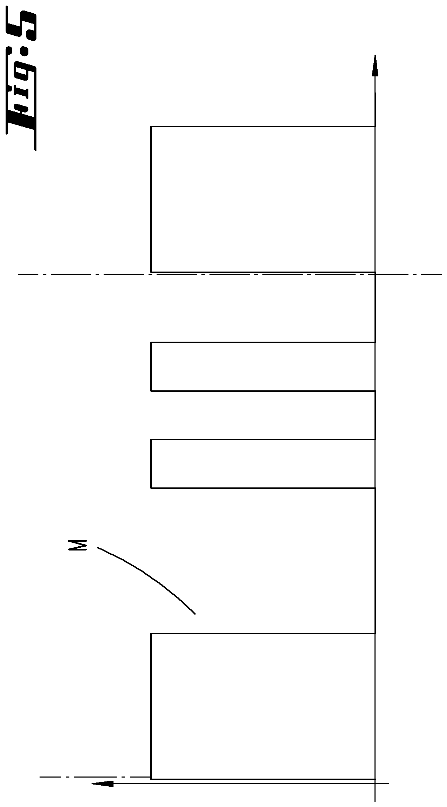

Das von der Lichtquelle 9 auszusendende Lichtsignal (bevorzugt Infrarotlichtsignal) ist bevorzugt moduliert (beispielsweise 20 kHz Rechteck). Entsprechend wird mit der Lichtquelle 9 bevorzugt ein Signal ausgesendet, wobei nach Empfang innerhalb des Gerätes 1 eine wie in Figur 3 beispielhaft dargestellte Elektronik zur Auswertung mit den analogen Signalen der Lichtsensoren 6 bis 8 arbeitet. Eine Digitalisierung in ein Signalmuster M (wie beispielhaft in den Figuren 4 und 5 dargestellt) erfolgt hiernach durch einen Mikrocontroller. Bevorzugt ist die weitere Auswertung des empfangenen Lichtsignals unabhängig von dessen Signalform.

Figur 4 zeigt hierbei ein typisches Signalmuster M mit einem innerhalb einer Periode über einen Zeitabschnitt vorhandenem, gleichbleibendem High-Level des Signals und einem über den restlichen Zeitabschnitt gleichbleibenden Low-Level-Signal. Bei Überschreiten bzw. Unterschreiten von Schwellwerten ist ein High- bzw. Low-Zustand geschaltet.

In Figur 5 ist ein weiteres mögliches Signalmuster M dargestellt, bei welchem innerhalb einer Periode das Low-Level-Signal unterbrochen ist von High-Level-Signalen gleicher Größe. Hierdurch ist eine weitere Codierung des Signals ermöglicht. Ein solches Signalmuster M erfordert einen Phasenabgleich, das heißt die Phase eines Referenzsignals wird verschoben.

Mittels der Lichtquelle 9 wird zur Zielführung des Gerätes 1 auf dem Boden 2 eine reflektierende Lichtfläche 11 erzeugt, die bevorzugt mit Ausnahme des zur Benutzerorientierung dienenden Laserpunktes nicht sichtbar ist. Das Gerät 1 ist entweder über die diskret angeordneten Lichtsensoren 6 bis 8 gemäß der in Fig. 1 dargestellten ersten Ausführungsform oder mittels des umlaufenden Lichtsensors 6 der zweiten Ausführungsform gemäß Fig. 2 in der Lage, die Richtung zum Lichtpunkt 11 zu ermitteln, um aus den berechneten Werten eine entsprechende Verfahrstrategie zu dem angeleuchteten Bereich des Bodens 2 abzurufen bzw. auszuarbeiten. Auch kann, insbesondere bei einem in Richtung Boden gerichteten Lichtsensor bevorzugt unter Nutzung eines Triangulationsverfahrens der Abstand zum Lichtpunkt 11 ermittelt werden.

Hierbei bilden der oder die Lichtsensoren 6 bis 8 und weiter bevorzugt die jeweils zugeordneten optischen Bauteile den Empfänger.

Um den relativen Winkel zum Lichtpunkt 11 in die Berechnung der Verfahrstrategie einzubeziehen, ist bei einem rotierenden Lichtsensor 6 gemäß der zweiten Ausführungsform bevorzugt eine Encoderscheibe mit Lichtschranke vorgesehen. Der mittels des so gestalteten Drehgebers ermittelte Drehwinkel des Lichtsensors 6 bzw. der Plattform 5 ist unter bevorzugter Einrechnung einer zeitlichen Verzögerung insbesondere zwischen dem Signalgeber und der auswertenden Elektronik die Richtung des Signals, insbesondere die Richtung des vom Boden 2 reflektierten Signalmusters M ermittelbar.

Bei einer Anordnung von mehreren diskret vorgesehenen Lichtsensoren 6 bis 8 gemäß dem Ausführungsbeispiel in Fig. 1 ist eine Ermittlung der Richtung des Signales daraus abzuleiten, welcher der Lichtsensoren 6 bis 8 das stärkste Signal empfangen hat.

Zur Richtungsdetektion des insbesondere optischen Signals ist die in Fig. 3 schematisch dargestellte Schaltungsanordnung vorgesehen, welche sich auf die fest installierte Anordnung von Lichtsensoren 6 bis 8 gemäß dem ersten Ausführungsbeispiel in Fig. 1 bezieht.

Wie aus der Darstellung zu erkennen, sind die mehreren, hier bevorzugt drei Lichtsensoren 6 bis 8 (wobei auch mehr als drei Lichtsensoren vorgesehen sein können, bspw. unter gleichmäßiger Aufteilung über den Umfang der Plattform 5) durch eine Sensor-Auswahleinheit 12 verbunden. Dieser ist nachgeschaltet ein Bandpassfilterelement 13 vorgesehen. Dieses dient der Entfernung unerwünschter Störungen auf den Signalleitungen zwischen den Lichtsensoren 6 bis 8 und insbesondere der Sensor-Auswahleinheit 12 mit Frequenzanteilen weitab der gesuchten Signalfrequenz. Die herausgefilterten Frequenzen werden im Folgenden entsprechend nicht weiter verstärkt.

Die nach dem Bandpassfilterelement 13 verbliebenden Signale werden in einem Vorverstärkerelement 14 auf ein weiter zu verarbeitendes Niveau angehoben.

Das Signal wird nachfolgend mit einem Referenzmuster (REF₁, REF₂) verrechnet bzw. verarbeitet, welches durch ein zentrales Steuerungselement 15 generiert wird. Letzteres ist bevorzugt ein Mikrocontroller, der weiter bevorzugt zwei um 90° zueinander phasenverschobene Referenzsignale REF₁ und REF₂ generiert. Pro Phase wird eine Verstärkerschaltung genutzt, welche bevorzugt mit Hilfe eines in dem zentralen Steuerungselement 15 integrierten Multiplexers zwischen invertierend und nicht-invertierend umschaltbar ist. Hierzu sind bevorzugt zwei phasenempfindliche Detektorelemente 16 und 17 vorgesehen, weiter bevorzugt in Form von Lock-In-Verstärkern.

Ausgewertet werden hiernach bevorzugt reine DC-Signale. Um diese zu erhalten, wird über die Ausgangssignale der vorangegangenen Schaltung integriert. Dies geschieht bevorzugt durch die Verwendung eines Tiefpassfilterelementes 18, 19 mit niedriger Grenzfrequenz. Jedem phasenempfindlichen Detektorelement 16, 17 ist ein solches Tiefpassfilterelement 18, 19 nachgeschaltet. Auch ist bevorzugt das phasenempfindliche Detektorelement 16,17 mit dem Tiefpassfilterelement zusammengefasst. Die Gesamtschaltung stellt ein sehr schmalbandiges Bandpassfilter dar. Eingekoppelte Störungen können so zuverlässig unterdrückt werden.

Die Tiefpassfilterelemente 18, 19 liefern in Abhängigkeit vom Vergleich des Signalmusters M zu dem jeweiligen Referenzsignal REF₁ bzw. REF₂ ein Ergebnis an das zentrale Steuerungselement 15. Nach einer Verrechnung im Mikrocontroller wird ein positives Ergebnis, d.h. bei Übereinstimmung von Signalmuster M und Referenzsignal REF₁ oder REF₂, zur Ermittlung der Richtungsinformation anhand des das Signal auffangenden, aktivierten Lichtsensors genutzt. Hierbei wird eine Umschaltung der Lichtsensoren 6 bis 8 mittels der Sensor-Auswahleinheit 12 durch das zentrale Steuerungselement 15 erreicht (vgl. Pfad "Sensor-ID" in Fig. 3).

Die Wahl des Verstärkungsfaktors V ergibt sich aus der zuletzt ermittelten Signalstärke am Ausgang eines phasenempfindlichen Detektorelementes 16,17 sowie aus den Signalstärken aller Sensoren. Liegt diese Signalstärke unterhalb eines empirisch ermittelten und bevorzugt in dem zentralen Steuerungselement 15 hinterlegten Grenzwertes, so wird der Verstärkungsfaktor V angehoben, um so das Signal nicht zu verlieren. Bei zu hoher Signalstärke droht hingegen eine Übersteuerung der Elektronik. Um dies zu verhindern, wird rechtzeitig ein hinreichend geringerer Verstärkungsfaktor V gewählt. Die Anpassung der Verstärkungsfaktoren V wird bevorzugt nach jeder Messung vorgenommen, wobei sich die Einstellung schaltungsbedingt bevorzugt auf alle Empfänger, d.h. auf alle Lichtsensoren, auswirkt.

Zudem bietet das zentrale Steuerungselement 15 die Möglichkeit, den Sender (hier die Lichtquelle 9) und den Empfänger (hier die Lichtsensoren 6 bis 8) mittels einer Kalibrierfunktion aufeinander abzustimmen ("System-Verheiratung").

In weiter bevorzugter Ausgestaltung ist jedes Tiefpassfilterelement 18, 19 mit einer Offset-Einstelleinheit 20 verbunden. Am Ausgang jedes phasenempfindlichen Detektorelementes 16, 17 können negative Spannungen auftreten, welche das zentrale Steuerungselement 15 oder auch Teile hiervon zerstören können. Um dies zu verhindern, werden die Potentiale durch die Offset-Einstelleinheit 20 auf eine Spannung von >0 Volt angehoben.

Durch die vorbeschriebene Elektronik ist bei einer Anordnung von mehreren Lichtsensoren der Lichtsensor mit dem stärksten Signalpegel identifizierbar, womit auch die korrekte Richtung ermittelbar ist, in die das Gerät verfahren soll. Es können jedoch auch mehrere, insbesondere benachbarte Lichtsensoren, beispielsweise zwei benachbarte Lichtsensoren, zumindest annähernd gleich starke Signalpegel aufweisen (gegebenenfalls innerhalb eines vorgegebenen Toleranzbereiches). In diesem Fall ist insbesondere bei zwei gleich starken Signalpegeln die Verfahrrichtung des Gerätes beispielsweise durch die Winkelhalbierende des die beiden Lichtsensoren einschließenden Winkels gegeben.

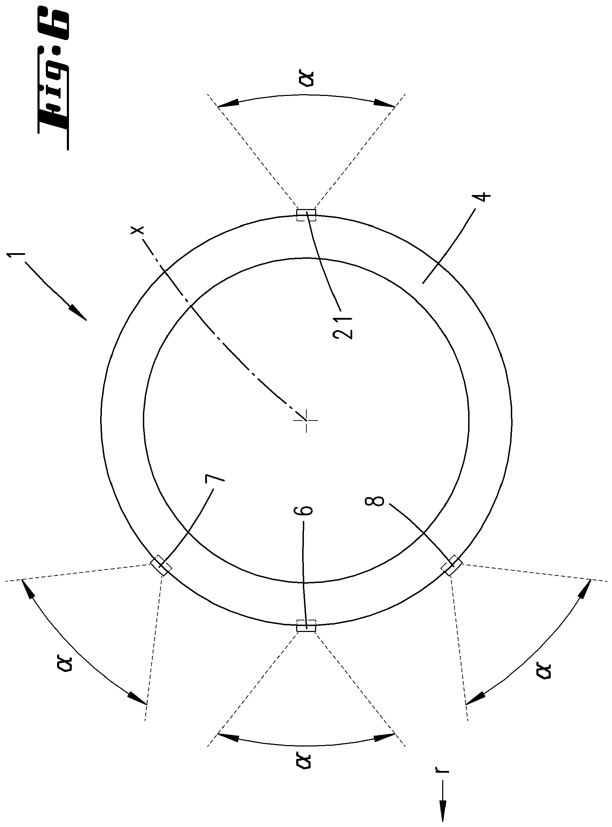

In Figur 6 ist eine Ausführungsform des Gerätes 1 dargestellt, bei welchem in üblicher Verfahrrichtung r drei über den Umfang des Gerätes 1 zueinander beabstandete Lichtsensoren 6 bis 8 vorgesehen sind und darüber hinaus ein Lichtsensor 21 an der der üblichen Verfahrrichtung r abgewandten Seite. Wie auch bei der Ausführung gemäß Figur 1 weist jeder Lichtsensor einen Erfassungswinkel α von bevorzugt 50° auf, alternativ einen Erfassungswinkel von 30° bis 180°, wobei die Erfassungsbereiche überlappen können.

Erfasst der rückwärtige Lichtsensor 21 den Lichtpunkt 11 (stärkerer Signalpegel an Lichtsensor 21), so wird das Gerät 1 veranlasst, um 180° zu drehen, wonach eine nächste Auswertung zur exakten Ausrichtung des Gerätes 1 mit den drei in Verfahrrichtung r angeordneten Lichtsensoren 6 bis 8 erfolgt.

Zufolge der vorbeschriebenen Schaltung wird auch bei Anordnung von mehreren Lichtsensoren nur eine Auswerteschaltung benötigt. Im bekannten Stand der Technik wird jedem Sensor so nah wie möglich eine zugeordnete Elektronik platziert, um keine verrauschten Signale zu erhalten. Hierzu ist es meist erforderlich, zumindest einen Teil der Elektronik mehrfach aufzubauen. Durch die vorgeschlagene Lösung ist eine zentrale, örtlich von den Lichtsensoren entfernte Auswerteschaltung gegeben. Die Funktionsweise ist sowohl mit abgestimmter Phase als auch mit nicht abgestimmter Phase möglich. Der optische Wellenlängenbereich kann durch geeigneten Austausch der Lichtsensoren in einfachster Weise geändert werden. Das Auswerteprinzip basiert auf den elektrisch gewandelten Sensorsignalen und ist somit von der Art des Detektors unabhängig. Es ist lediglich eine stabile Sendefrequenz erforderlich. Das digitalisierte Signalmuster und die Signalfrequenz können ebenfalls nahezu frei gewählt werden, da das entsprechende Referenzsignal in dem zentralen Steuerungselement 15 gezielt nachgebildet werden kann.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

**Bezugszeichenliste:**

| | | | |
|---|---|---|---|
| 1 | Gerät | REF₁ | Referenzsignal |
| 2 | Boden | REF₂ | Referenzsignal |
| 3 | Verfahrrad | V | Verstärkungsfaktor |
| 4 | Gerätehaube | | |
| 5 | Plattform | | |
| 6 | Lichtsensor | | |
| 7 | Lichtsensor | | |
| 8 | Lichtsensor | | |
| 9 | Lichtquelle | | |
| 10 | Fernbedienung | | |
| 11 | Lichtpunkt | | |
| 12 | Sensor-Auswahleinheit | | |
| 13 | Bandpassfilterelement | | |
| 14 | Vorverstärkerelement | | |
| 15 | Zentrales Steuerungselement | | |
| 16 | Phasenempfindliches Detektorelement | | |
| 17 | Phasenempfindliches Detektorelement | | |
| 18 | Tiefpassfilterelement | | |
| 19 | Tiefpassfilterelement | | |
| 20 | Offset-Einstelleinheit | | |
| 21 | Lichtsensor | | |
| | | | |
| r | Verfahrrichtung | | |
| x | Vertikalachse | | |
| α | Winkel | | |
| | | | |
| M | Signalmuster | | |

## Patentansprüche

1. Selbsttätig verfahrbares Gerät (1), insbesondere Reinigungsgerät zur Reinigung eines Bodens (2), wie ein Saug- und/oder Kehrroboter, mit einem oder mehreren Lichtsensoren (6 bis 8), **dadurch gekennzeichnet, dass** ein Vorverstärkungselement (14) vorgesehen ist und ein phasenempfindliches Detektorelement (16,17) sowie ein zentrales Steuerungselement (15), dass ein von dem Lichtsensor (6 bis 8) geliefertes Signal im Hinblick auf ein von dem zentralen Steuerungselement (15) vorgegebenes Signalmuster geprüft wird und dass dieses Signal im Hinblick auf eine Steuerung des Geräts (1) mit der Ausrichtung des jeweiligen Lichtsensors (6 bis 8) bei Anordnung von mehreren Lichtsensoren (6 bis 8) in Zusammenhang gebracht wird oder mit der Winkelausrichtung eines Lichtsensors (6).

2. Gerät nach Anspruch 1, **dadurch gekennzeichnet, dass** dem Vorverstärkerelement (14) ein Auswahlelement (12) vorgeschaltet ist, zur Auswahl eines Lichtsensors (6 bis 8) bei Anordnung von mehreren Lichtsensoren (6 bis 8).

3. Gerät nach einem oder mehreren der vorhergehenden Ansprüche, **dadurch gekennzeichnet, dass** ein Bandpassfilterelement (13) vorgesehen ist, das von einem Lichtsensorsignal vor Erreichen des Vorverstärkerelements (14) zu durchlaufen ist.

4. Gerät nach einem oder mehreren der vorhergehenden Ansprüche, **dadurch gekennzeichnet, dass** ein Vorverstärkungsfaktor (V) des Vorverstärkerelements (14) durch das zentrale Steuerungselement (15) vorgegeben ist.

5. Gerät nach einem oder mehreren der vorhergehenden Ansprüche, **dadurch gekennzeichnet, dass** die Auswahl eines Lichtsensors (6 bis 8) bei Anordnung von mehreren Lichtsensoren (6 bis 8) durch das zentrale Steuerungselement (15) vornehmbar ist.

6. Gerät nach einem oder mehreren der vorhergehenden Ansprüche, **dadurch gekennzeichnet, dass** zwischen dem phasenempfindlichen Detektorelement (16,17) und dem zentralen Steuerungselement (15) ein Tiefpassfilterelement (18, 19) geschaltet ist.

7. Gerät nach Anspruch 6, **dadurch gekennzeichnet, dass** das Tiefpassfilterelement (18, 19) mit einer Offset-Einstelleinheit (20) verbunden ist.

8. Gerät nach einem oder mehreren der vorhergehenden Ansprüche, **dadurch gekennzeichnet, dass** ein Lichtsensor (6 bis 8) im Hinblick auf ein bestimmtes Frequenzband ausgewählt oder eingerichtet ist und das Lichtsignal innerhalb dieses Frequenzbandes gegeben ist.

9. Verfahren zur Zielführung eines selbsttätig verfahrbaren Gerätes (1), insbesondere Reinigungsgerätes zur Reinigung eines Bodens (2) wie ein Saug- und/oder Kehrroboter, mit einem oder mehreren Lichtsensoren (6 bis 8), **dadurch gekennzeichnet, dass** ein von dem Lichtsensor (6 bis 8) geliefertes Signal mittels eines Vorverstärkerelementes (14) verstärkt wird, von einem phasenempfindlichen Detektorelement (16,17) detektiert wird und im Hinblick auf ein von einem zentralen Steuerungselement (15) vorgegebenes Signalmuster geprüft wird und dass dieses Signal im Hinblick auf eine Steuerung des Geräts (1) mit der Ausrichtung des jeweiligen Lichtsensors (6 bis 8) bei Anordnung von mehreren Lichtsensoren (6 bis 8) in Zusammenhang gebracht wird oder mit der Winkelausrichtung eines Lichtsensors (6).

## Claims

1. Self-propelling device (1), in particular a cleaning device for cleaning a floor (2), such as a vacuum and/or sweeping robot, comprising one or more light sensors (6 to 8), **characterised in that** a preamplifier element (14) is provided and a phase-sensitive detector element (16, 17) and a central control element (15), **in that** a signal supplied by the light sensor (6 to 8) is checked with regard to a signal pattern specified by the central control element (15), and **in that** this signal, with regard to controlling the device (1), is linked to the orientation of the relevant light sensor (6 to 8) when a plurality of light sensors (6 to 8) are arranged or to the angular orientation of a light sensor (6).

2. Device according to claim 1, **characterised in that** a selection element (12) is connected upstream of the preamplifier element (14) for selecting a light sensor (6 to 8) when several light sensors (6 to 8) are arranged.

3. Device according to one or more of the preceding claims, **characterised in that** a bandpass filter element (13) is provided, which is to be traversed by a light sensor signal before reaching the preamplifier element (14).

4. Device according to one or more of the preceding claims, **characterised in that** a preamplification factor (V) of the preamplifier element (14) is specified by the central control element (15).

5. Device according to one or more of the preceding claims, **characterised in that** the selection of a light sensor (6 to 8) in the arrangement of a plurality of light sensors (6 to 8) can be made by the central control element (15).

6. Device according to one or more of the preceding claims, **characterised in that** a low-pass filter element (18, 19) is connected between the phase-sensitive detector element (16, 17) and the central control element (15).

7. Device according to claim 6, **characterised in that** the low-pass filter element (18, 19) is connected to an offset setting unit (20).

8. Device according to one or more of the preceding claims, **characterised in that** a light sensor (6 to 8) is selected or configured with respect to a specific frequency band and the light signal is produced within this frequency band.

9. Method for the route guidance of a self-propelling device (1), in particular a cleaning device for cleaning a floor (2) such as a vacuum and/or sweeping robot, comprising one or more light sensors (6 to 8), **characterised in that** a signal supplied by the light sensor (6 to 8) is amplified by means of a preamplifier element (14), is detected by a phase-sensitive detector element (16, 17), and is checked with regard to a signal pattern specified by a central control element (15), and **in that** this signal, with regard to controlling the device (1), is linked to the orientation of the relevant light sensor (6 to 8) when a plurality of light sensors (6 to 8) are arranged or to the angular orientation of a light sensor (6).

## Revendications

1. Dispositif à déplacement automatique (1), en particulier dispositif de nettoyage pour le nettoyage d'un sol (2), tel qu'un robot aspirateur et/ou balayeur, avec un ou plusieurs capteurs de lumière (6 à 8), **caractérisé en ce qu'**il est prévu un élément de préamplification (14) et un élément détecteur (16, 17) sensible à la phase, ainsi qu'un élément de commande central (15), **en ce qu'**un signal fourni par le capteur de lumière (6 à 8) est examiné par rapport à un modèle de signal prédéterminé par l'élément de commande central (15) et **en ce que** ce signal est associé à l'orientation du capteur de lumière respectif (6 à 8) en cas d'agencement de plusieurs capteurs de lumière (6 à 8) ou à l'orientation angulaire d'un capteur de lumière (6) en vue de la commande du dispositif (1).

2. Dispositif selon la revendication 1, **caractérisé en ce qu'**un élément de sélection (12) est monté en amont de l'élément préamplificateur (14) pour sélectionner un capteur de lumière (6 à 8) en cas d'agencement de plusieurs capteurs de lumière (6 à 8).

3. Dispositif selon une ou plusieurs des revendications précédentes, **caractérisé en ce qu'**il est prévu un élément de filtre passe-bande (13) à travers lequel un signal de capteur de lumière doit passer avant d'atteindre l'élément préamplificateur (14).

4. Dispositif selon une ou plusieurs des revendications précédentes, **caractérisé en ce qu'**un facteur de préamplification (V) de l'élément préamplificateur (14) est prédéterminé par l'élément de commande central (15).

5. Dispositif selon une ou plusieurs des revendications précédentes, **caractérisé en ce que**, en cas d'agencement de plusieurs capteurs de lumière (6 à 8), la sélection d'un capteur de lumière (6 à 8) peut être effectuée par l'élément de commande central (15).

6. Dispositif selon une ou plusieurs des revendications précédentes, **caractérisé en ce qu'**un élément de filtre passe-bas (18, 19) est connecté entre l'élément détecteur sensible à la phase (16, 17) et l'élément de commande (15).

7. Dispositif selon la revendication 6, **caractérisé en ce que** l'élément de filtre passe-bas (18, 19) est relié à une unité de réglage d'offset (20).

8. Dispositif selon une ou plusieurs des revendications précédentes, **caractérisé en ce qu'**un capteur de lumière (6 à 8) est sélectionné ou configuré par rapport à une certaine bande de fréquences et le signal lumineux est fourni à l'intérieur de cette bande de fréquences.

9. Procédé de guidage ciblé d'un dispositif à déplacement automatique (1), en particulier un dispositif de nettoyage pour nettoyer un sol (2) tel qu'un robot aspirateur et/ou balayeur, avec un ou plusieurs capteurs de lumière (6 à 8), **caractérisé en ce qu'**un signal fourni par le capteur de lumière (6 à 8) est amplifié au moyen d'un élément préamplificateur (14), est détecté par un élément détecteur (16, 17) sensible à la phase et est examiné par rapport à un modèle de signal prédéterminé par un élément de commande central (15) et **en ce que** ce signal est associé à l'orientation du capteur de lumière respectif (6 à 8) en cas d'agencement de plusieurs capteurs de lumière (6 à 8) ou avec l'orientation angulaire d'un capteur de lumière (6) en vue de la commande du dispositif (1).
